# FASCICULE DE BREVET EUROPEEN

(11) **EP 0 580 497 B1**
(45) Date de publication et mention de la délivrance du brevet: **20.10.1999**
(21) Numéro de dépôt: 93401867.2
(22) Date de dépôt: 20.07.1993
(51) Int. Cl.: H04L 1/12, H04B 10/00

(54) **Système de transmission d' informations numériques, sous forme optique sur une liaison optique**
Anordnung zur optischen Übertragung digitaler Informationen über eine optische Leitung
System for optically transmitting digital data over an optical transmission line

(30) Priorité: 22.07.1992 FR 9209047
(43) Date de publication de la demande: 26.01.1994
(73) Titulaire: ALCATEL, 75008 Paris (FR)
(72) Inventeur: Le Mouel, Bernard, F-22700 Saint Quay Perros (FR); Ollivier, François-Xavier, F-22300 Lannion (FR); Pamart, Jean-Luc, F-22450 La Roche Derrien (FR)
(74) Mandataire: El Manouni, Josiane

(56) Documents cités:
- EP-A- 0 188 271
- EP-A- 0 240 157
- EP-A- 0 313 383
- DE-A- 3 140 960
- GB-A- 2 160 392
- US-A- 3 934 224

## Description

La présente invention concerne la transmission d'informations numériques, sous forme optique sur une liaison optique

On sait que dans un système de transmission d'informations numériques, notamment sur une liaison optique, la qualité de transmission (que l'on mesure par le taux d'erreurs en réception, à savoir le rapport entre le nombre de bits faux à l'issue de l'opération de décision effectuée en réception dans un tel système, pour permettre la reconstitution desdites informations, et le nombre total de bits reçus) dépend en grande partie des performances de l'émetteur et du récepteur, et notamment des performances de l'émetteur et du récepteur optique dans le cas d'une liaison optique.

Actuellement les paramètres caractéristiques de cet émetteur et de ce récepteur (tels que par exemple, dans le cas d'une liaison optique, la longueur d'onde et la puissance optique d'émission, ou le facteur d'avalanche d'une photodiode de réception) sont, avec les autres paramètres caractéristiques du système (tels que, notamment, le type de fibre utilisé dans le cas d'une liaison optique) déterminés à la conception du système, en fonction des besoins de l'utilisateur du système (exprimés notamment par la longueur de la liaison, le débit à transmettre, et le taux d'erreurs maximum acceptable en réception), de façon à garantir, en réception, un taux d'erreurs inférieur ou égal à ce taux d'erreurs maximum acceptable spécifié par l'utilisateur. Ce mode de fixation des paramètres caractéristiques de l'émetteur et du récepteur a pour inconvénient de ne pas nécessairement conduire, en cours d'utilisation, à un point de fonctionnement optimal pour cet émetteur et/ou ce récepteur, au sens notamment où il ne tient pas compte de l'évolution, au cours du temps, de ces paramètres.

On connaît, par ailleurs, des systèmes de transmission, notamment optiques, dans lesquels il est prévu, en cours d'utilisation, un asservissement de la longueur d'onde optique d'émission sur une longueur d'onde de référence, déterminée elle-même, comme indiqué ci-dessus, au moment de la conception du système, en l'occurrence de façon à se situer dans une certaine fenêtre optique, déterminée à son tour en fonction du type de fibre utilisé et d'une éventuelle utilisation, sur cette liaison, de certains composants tels que des amplificateurs optiques.

Un tel mécanisme d'asservissement a cependant pour inconvénient d'être relativement coûteux et complexe à mettre en oeuvre, puisqu'il nécessite, entre autres, l'utilisation d'une source optique très stable et de longueur d'onde précisément connue, et de ne pas non plus nécessairement conduire à un point de fonctionnement optimal pour l'émetteur optique, au sens où, s'exerçant localement, il ne tient pas compte de l'effet global du système de transmission, c'est-à-dire en l'occurrence, des effets conjugués d'une dérive de la longueur d'onde et d'une possible évolution des autres paramètres caractéristiques du système de transmission, sur les performances de ce système.

On connaît par les documents EP-A-0 188 271 et GB-A-2 160 392 des systèmes de transmission comportant des moyens pour sélectionner un code correcteur d'erreur parmi plusieurs, ce qui a pour effet d'optimiser dynamiquement le choix du code, mais n'a aucun effet sur les différences de vitesse de propagation.

La présente invention a pour objet un système de transmission d'informations numériques, notamment sur une liaison optique, permettant notamment d'éviter les inconvénients précités.

La présente invention a pour objet un système de transmission d'informations numériques, sous forme optique sur une liaison optique, comportant un équipement d'extrémité-émission, un équipement d'extrémité-réception, et des moyens de décodage correcteur d'erreurs localisés dans l'équipement d'extrémité-réception et coopérant avec des moyens de codage correcteur d'erreurs localisés dans l'équipement d'extrémité-émission, des moyens d'évaluation de taux d'erreurs en réception avant décodage correcteur d'erreurs, et des moyens de commande d'un ou de plusieurs paramètres caractéristiques de l'équipement d'extrémité-émission et/ou de l'équipement d'extrémité-réception, en fonction du taux d'erreurs évalué, et en fonction des capacités de correction du code correcteur d'erreurs considéré, de façon à optimiser en permanence ce ou ces paramètres au regard des performances réelles du système de transmission, sans que le taux d'erreurs en sortie desdits moyens de décodage ne dépasse le taux d'erreurs maximum spécifié pour ledit système de transmission ;
**caractérisé** en ce que l'équipement d'extrémité-émission et/ou de l'équipement d'extrémité-réception comporte des moyens prévus pour combattre les phénomènes dits de dispersion dus à des différences de vitesse de propagation de deux modes de propagation ;
et en ce les moyens de commande d'un ou de plusieurs paramètres caractéristiques de l'équipement d'extrémité-émission et/ou de l'équipement d'extrémité-réception commandent un ou plusieurs paramètres des moyens prévus pour combattre les phénomènes dits de dispersion.

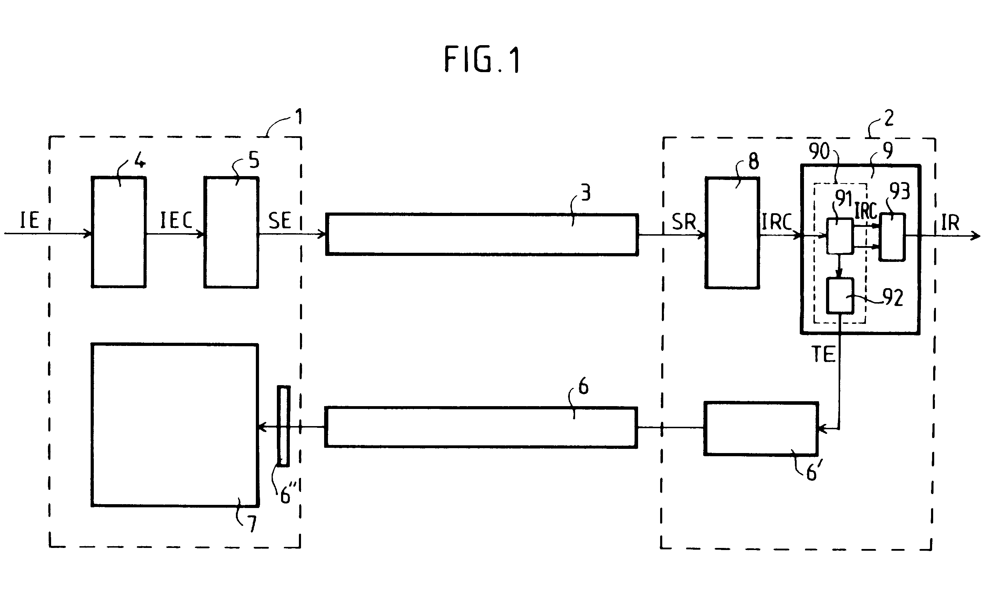

D'autres objets et caractéristiques de la présente invention apparaîtront à la lecture de la description suivante d'exemples de réalisation, donnés à titre d'exemple pour le cas d'une liaison optique, ladite description étant faite en relation avec les dessins ci-annexés dans lesquels :
- la figure 1 est un schéma synoptique d'un exemple de réalisation d'un système de transmission optique suivant l'invention, incluant une commande d'un ou de plusieurs paramètres caractéristiques de l'émetteur optique,
- la figure 2 est un algorithme destiné à illustrer le principe de ladite commande, à titre d'exemple dans le cas de commande de la longueur d'onde de l'émetteur optique,
- la figure 3 est un schéma synoptique d'un exemple de réalisation d'un système de transmission optique suivant l'invention, incluant une commande d'un ou de plusieurs paramètres caractéristiques du récepteur optique.
Le système de transmission optique suivant l'invention, illustré sur la figure 1, comporte un équipement dit d'extrémité-émission, référencé 1, et un équipement dit d'extrémité-réception, référencé 2, reliés par une liaison optique, référencée 3. Ce système peut, en outre, comporter un ou plusieurs équipements intermédiaires tels que des répéteurs à amplificateurs optiques, non illustrés sur cette figure.

L'équipement d'extrémité-émission 1 comporte des moyens de codage correcteur d'erreurs, référencés 4, qui reçoivent les informations numériques à transmettre, notées IE.

Les moyens de codage correcteur d'erreurs peuvent mettre en oeuvre un code correcteur d'erreurs tel que par exemple un code linéaire en blocs comme ceux dits B.C.H. (Bose Chaudhuri-Hocquenghem) ou encore Reed-Solomon, ou bien un code convolutionnel, ou bien encore mettre en oeuvre une concaténation de plusieurs de ces codes, identiques ou différents, dont on pourra trouver des descriptions dans la littérature.

L'équipement d'extrémité-émission 1 comporte en outre un émetteur optique 5, qui reçoit les informations IEC issues des moyens de codage correcteur d'erreurs et qui fournit un signal optique SE transmis sur la liaison optique. L'émetteur optique 5 comporte notamment un transducteur électro-optique ainsi qu'éventuellement des moyens pour mettre les informations numériques à transmettre et issues en l'occurrence des moyens de codage correcteur d'erreurs, sous une forme adaptée à leur transmission sur une liaison optique.

L'équipement d'extrémité-réception comporte un récepteur optique 8 qui reçoit un signal optique noté SR, et qui comporte lui-même, notamment, un transducteur optoélectronique, des moyens de décision, ainsi qu'éventuellement des moyens permettant de repasser de la forme des informations numériques adaptée à leur transmission sur la liaison optique à la forme initiale.

Le récepteur optique 8 délivre des informations numériques, IRC, qui sont appliqués à des moyens de décodage correcteur d'erreurs 9 opérant suivant le code choisi à l'émission pour les moyens de codage correcteur d'erreurs 4. Les informations issues des moyens de décodage correcteur d'erreurs 9 sont notées IR.

Dans l'exemple illustré sur la figure 1, les moyens de décodage correcteur d'erreurs 9 sont, en outre, utilisés pour fournir une information, TE, constituée par le taux d'erreurs avant décodage correcteur d'erreurs.

Cette information TE est plus précisément fournie par des moyens 90 dits d'évaluation de taux d'erreurs, comprenant eux mêmes des moyens 91 dits de détection d'erreurs et des moyens 92 dits d'évaluation de taux d'erreurs à partir d'informations issues des moyens de détection d'erreurs 91, ces moyens 92 fournissant l'information TE.

Outre les moyens 91 et 92, les moyens de décodage correcteur d'erreurs 9 comportent des moyens 93 dits de décodage correcteur d'erreurs proprement dit, fournissant les informations IR à partir des informations IRC qui lui sont retransmises par les moyens de détection d'erreurs 91, et à partir d'informations spécifiquement élaborées par ces moyens 91.

Comme symbolisé sur la figure 1, cette information TE est acheminée vers l'équipement d'extrémité-émission 1 par l'intermédiaire d'un canal dit de retour 6, qui, concrètement, peut par exemple prendre la forme d'une part de débit transmis sur la liaison de retour dans le cas d'une liaison optique bidirectionnelle, mais qui pourrait aussi être transmis sur une liaison distincte, optique ou non optique, pouvant en outre, par exemple, emprunter le réseau commuté.

L'information TE est, préalablement à cet acheminement, mise sous une forme adaptée, par l'intermédiaire d'un moyen de mise en forme, référencé 6', dont la constitution dépend de la forme ainsi prise par ce canal de retour.

Le signal issu du moyen de mise en forme 6', et acheminé par le canal de retour 6, est reçu, dans l'équipement d'extrémité-émission, par un moyen 6'' d'extraction de l'information TE, ce moyen 6'' ayant une fonction complémentaire de celle du moyen de mise en forme 6'. L'information TE ainsi extraite est appliquée à des moyens 7 de commande d'un ou de plusieurs paramètres caractéristiques de l'émetteur optique.

Dans l'exemple illustré sur la figure 1, le canal de retour 6 sert ainsi à acheminer l'information de taux d'erreurs TE de l'équipement d'extrémité-réception vers l'équipement d'extrémité-émission, l'élaboration de la commande du ou des paramètres considérés de l'émetteur optique étant ensuite effectuée par lesdits moyens de commande 7 qui sont alors localisés dans l'équipement d'extrémité-émission. Le canal de retour 6 pourrait cependant être utilisé directement pour l'acheminement de ladite commande si celle-ci était élaborée dans l'équipement d'extrémité-réception.

Les moyens de commande 7 réalisent une commande de ce ou ces paramètres, en fonction du taux d'erreurs TE observé à l'entrée des moyens de décodage 9, et des capacités de correction du code correcteur d'erreurs considéré, de façon à optimiser en permanence ce ou ces paramètres au regard des performances réelles du système de transmission, sans que le taux d'erreurs en sortie de ces moyens de décodage ne dépasse le taux d'erreurs maximum spécifié pour le système de transmission.

De cette façon, le point de fonctionnement de l'émetteur optique est en permanence optimisé au regard des performances réelles du système de transmission, et ce sans nécessiter de mesure préalable du ou des paramètres considérés, le code correcteur d'erreurs intervenant aussi bien pour évaluer ces performances réelles que pour masquer, vis-à-vis de l'utilisateur, les erreurs apparaissant en fonctionnement, notamment du fait même de cette recherche permanente du point de fonctionnement optimal.

A titre d'exemple de paramètres caractéristiques de l'émetteur optique susceptibles d'une telle commande on citera :
- la longueur d'onde optique
- la puissance optique
- la température
- le point de polarisation d'un modulateur dit externe dans le cas d'un transducteur électro-optique formé d'une source optique non directement modulable associée à un tel modulateur externe.

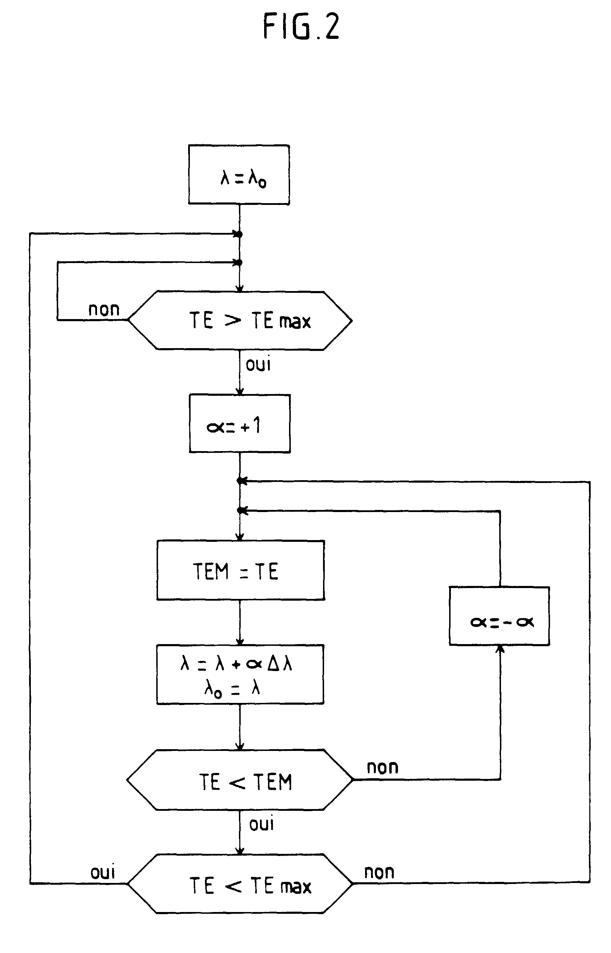

On décrit maintenant, en relation avec la figure 2, un algorithme possible de fonctionnement des moyens de commande 9, à titre d'exemple dans le cas de commande d'un seul paramètre caractéristique de l'émetteur optique, constitué par sa longueur d'onde d'émission.

Cet algorithme comporte, après avoir initialisé la longueur d'onde λ de l'émetteur optique à une valeur dite de démarrage contenue dans une variable intermédiaire λₒ stockée dans une mémoire reprogrammable, une première étape visant à déterminer si le taux d'erreur TE en entrée des moyens de décodage correcteur d'erreurs est, ou non, supérieur à un taux d'erreurs maximum acceptable en entrée de ces moyens de décodage correcteur d'erreurs, noté TE max. Ce taux d'erreurs TE max est choisi de valeur inférieure ou légèrement inférieure à une valeur notée TE MAX correspondant, en sortie des moyens de décodage correcteur d'erreurs, et compte tenu des capacités de correction du code correcteur d'erreurs considéré, à une valeur de taux d'erreurs égale au taux d'erreurs maximum spécifié pour le système de transmission, noté te MAX.

Le taux d'erreurs TE max est ainsi choisi inférieur ou légèrement inférieur au taux d'erreurs TE MAX afin de garantir en toutes circonstances, y compris lorsque le taux d'erreurs TE devient supérieur au taux d'erreurs TE max, que le taux d'erreurs "te" en sortie des moyens de décodage ne dépasse pas le taux d'erreurs maximum te MAX spécifié pour le système de transmission. La marge dans laquelle TE max doit être inférieur à TE MAX est à laisser, pour chaque cas, à l'appréciation de l'opérateur. On pourra, en outre, augmenter cette marge pour prendre en compte d'autres critères d'optimisation de l'émetteur optique, tels que par exemple une économie de sa durée de vie.

Si, à l'issue de cette première étape, on détermine que le taux d'erreurs TE est supérieur au taux d'erreurs TE max, un coefficient α, dit inverseur du sens d'incrémentation de la longueur d'onde, est initialisé à la valeur 1, et la valeur considérée du taux d'erreurs TE est mise dans une variable intermédiaire TEM stockée dans une mémoire reprogrammable.

La longueur d'onde λ est ensuite incrémentée de α Δ λ où Δ λ désigne la valeur absolue du pas d'incrémentation de cette longueur d'onde, et la valeur obtenue à l'issue de cette incrémentation est mise dans la variable intermédiaire λₒ.

On détermine ensuite si la valeur en cours du taux d'erreurs TE est, ou non, inférieure à la valeur contenue dans la variable TEM.

Si oui, cela signifie que le sens d'incrémentation est correct, et la prochaine vérification à effectuer consiste alors à déterminer si la valeur en cours du taux d'erreurs TE est, ou non, inférieure au taux d'erreurs TE max.

Si la valeur en cours du taux d'erreurs TE est inférieure au taux d'erreurs TE max, cela signifie que la longueur d'onde peut être maintenue à la valeur ainsi acquise, et le processus est ensuite réitéré à partir de la première étape.

Si la valeur en cours du taux d'erreurs TE est supérieure au taux d'erreurs TE max, cela signifie que bien que le sens d'incrémentation soit correct, l'ajustement de la longueur d'onde n'est pas terminé, et le processus est réitéré à partir de l'étape de mémorisation de la valeur en cours du taux d'erreurs TE dans la variable intermédiaire TEM.

Si, lors de la comparaison de la valeur en cours du taux d'erreurs TE par rapport à la valeur(précédente) contenue dans la variable intermédiaire TEM, on trouve au contraire que la valeur en cours du taux d'erreurs TE est supérieure à la valeur contenue dans la variable intermédiaire TEM, cela signifie que le sens d'incrémentation n'est pas correct, auquel cas on change ce sens d'incrémentation (en l'occurrence en changeant le coefficient α en -α) puis le processus est également réitéré à partir de l'étape de mémorisation de la valeur en cours du taux d'erreurs TE dans la variable intermédiaire TEM.

On notera que la valeur Δ λ doit en outre être choisie suffisamment faible afin de garantir en toutes circonstances, y compris lorsque, dans le cas où TE devient supérieur à TE max, le premier sens d'incrémentation considéré n'est pas correct, que le taux d'erreurs "te" en sortie des moyens de décodage ne dépasse pas le taux d'erreurs maximum te MAX spécifié pour le système de transmission.

Si, par contre, à l'issue de la première étape, on détermine que le taux d'erreurs TE est inférieur au taux d'erreurs TE max, la longueur d'onde λ de l'émetteur optique conserve, dans l'exemple considéré ici, sa valeur précédemment acquise et cette première étape continue à être mise en oeuvre, jusqu'à détecter le moment éventuel où le taux d'erreurs TE devient supérieur au taux d'erreurs TE max.

On notera que, pour certains paramètres, tels que la puissance optique d'émission par exemple, il serait possible, dans le cas où, à l'issue de la première étape, on détermine que le taux d'erreurs TE est inférieur au taux d'erreurs TE max, de procéder à un réajustement de ce paramètre de façon à autoriser une dégradation des performances de l'émetteur, dans le cas où un autre critère d'optimisation à prendre en compte consiste dans l'économie de la durée de vie du système.

On notera par ailleurs que la valeur contenue dans la variable intermédiaire λₒ à la mise en service du système pourra par exemple être choisie égale à une valeur dite nominale de la longueur d'onde, déterminée comme indiqué dans l'introduction, au moment de la conception du sytème.

on notera en outre que l'exemple d'algorithme ainsi décrit est transposable au cas de commande de paramètres autres que la longueur d'onde ainsi qu'au cas de commande de plusieurs paramètres simultanément, par exemple en utilisant un mécanisme de gestion de priorité.

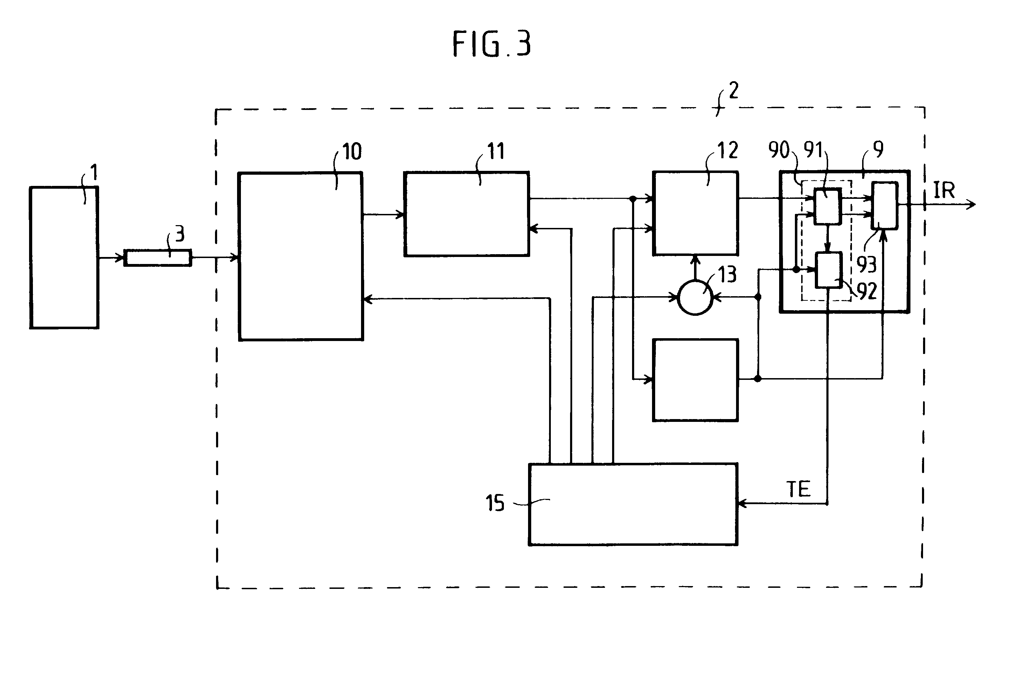

La figure 3 représente un schéma synoptique d'un système de transmission optique incluant une commande, suivant l'invention, d'un ou de plusieurs paramètres caractéristiques du récepteur optique.

Pour simplifier, les éléments communs avec le système de transmission représenté sur la figure 1 ont été repérés avec les mêmes références et ne seront pas redécrits ici.

Sur cette figure 3 est par ailleurs représenté plus en détail le récepteur optique qui comporte en l'occurrence :
- un transducteur optoélectronique, 10, recevant le signal optique reçu SR et constitué en l'occurrence par une photodiode dite à avalanche, munie d'une commande externe de son facteur d'avalanche,
- un filtre de réception, 11, disposé en sortie de transducteur optoélectronique, permettant de réduire l'influence des distorsions et des perturbations affectant les signaux transmis, et muni en l'occurrence d'une commande externe de sa fréquence de coupure et d'une commande externe d'un paramètre appelé facteur d'amortissement (ou "roll-off" dans la littérature anglo-saxonne),
- des moyens de régénération, 12, disposés en sortie du filtre de réception, 11, et comportant eux-même, bien que non illustré spécifiquement sur le dessin :
   . des moyens d'échantillonnage du signal issu du filtre de réception avec un signal d'horloge d'échantillonnage issu lui-même de moyens, 13, de déphasage réglable de ce signal d'horloge d'échantillonnage, ces moyens de déphasage recevant à leur tour d'une part un signal d'horloge issu de moyens, 14, de récupération de rythme du train numérique reçu et d'autre part un signal de commande externe de la phase de ce signal d'horloge d'échantillonnage,
   . des moyens de décision, c'est-à-dire de comparaison des échantillons ainsi obtenus par rapport à un seuil de décision dont le niveau est en l'occurrence réglable par une commande externe de niveau de ce seuil.

Le signal issu des moyens de régénération, 12, est appliqué aux moyens 9 de décodage correcteur d'erreurs, lesquels sont constitués comme illustré sur la figure 1 (si ce n'est que la commande des différents moyens 91, 92 et 93 par le signal d'horloge issu des moyens 14 a en outre été spécifiquement illustrée) et fournissent, comme dans le cas de la figure 1, d'une part, des informations numériques corrigées IR et d'autre part, une information TE de taux d'erreurs avant décodage correcteur d'erreurs.

Cette information de taux d'erreurs TE est appliquée à des moyens de commande 15 permettant d'élaborer lesdites commandes externes (de facteur d'avalanche de la photodiode, de fréquence de coupure et de facteur d'amortissement du filtre de réception, de phase du signal d'horloge d'échantillonnage, et de niveau du seuil de décision) en fonction de ce taux d'erreurs TE et des capacités de correction du code correcteur d'erreurs, de façon à optimiser en permanence ces paramètres, au regard des performances réelles du système de transmission, sans que le taux d'erreurs en sortie des moyens de décodage correcteur d'erreurs ne dépasse le taux d'erreurs maximum spécifié pour le système de transmission.

Les moyens de commande 15 peuvent fonctionner suivant un principe tout à fait analogue à celui décrit ci-dessus, en relation avec les figures 1 et 2, pour le cas de commande d'un ou de plusieurs paramètres caractéristiques de l'émetteur optique (en remplaçant simplement, par exemple dans le cas de commande d'un seul paramètre caractéristique de l'équipement d'extrémité-réception, la variable intermédiaire λₒ par une variable intermédiaire correspondant au paramètre considéré).

On pourra en outre envisager une commande simultanée d'un ou de plusieurs paramètres caractéristiques de l'émetteur optique et d'un ou de plusieurs paramètres caractéristiques du récepteur optique.

Dans les exemples de réalisation décrits ci-dessus en relation avec les figures 1 à 3, les moyens de décodage correcteurs, localisés dans l'équipement d'extrémité-réception et coopérant avec des moyens de codage correcteur d'erreurs localisés dans l'équipement d'extrémité-émission, sont en outre utilisés pour fournir le taux d'erreurs en réception, avant décodage correcteur d'erreurs. Il serait cependant possible d'utiliser un simple code détecteur d'erreurs au lieu d'un code correcteur d'erreurs pour évaluer ledit taux d'erreurs en réception avant décodage correcteur d'erreurs, auquel cas les moyens pour évaluer ce taux d'erreurs comporteraient des moyens de décodage détecteur d'erreurs localisés dans l'équipement d'extrémité-réception et coopérant avec des moyens de codage détecteur d'erreurs localisés dans l'équipement d'extrémité-émission.

A titre d'exemple de paramètres caractéristiques de l'équipement d'extrémité-émission ou de l'équipement d'extrémité-réception susceptibles d'être commandés suivant la présente invention, on citera encore des paramètres caractéristiques de moyens particuliers pouvant être prévus dans l'un ou l'autre de ces équipements pour combattre les phénomènes dits de dispersion dûs à des différences de vitesse de propagation des deux modes de propagation transmis dans une fibre optique non isotrope (soit par construction, soit du fait de contraintes apparaissant lors de son utilisation), ces phénomènes entrainant en effet un étalement des impulsions lumineuses transmises, et donc une dégradation des performances du système de transmission.

A titre d'exemple de moyens pouvant être utilisés pour combattre ces phénomènes on citera :
- des moyens pour appliquer une contrainte mécanique, telle qu'un écrasement ou une torsion, à la fibre, sur une grande longueur, enroulée, de celle-ci,
- des moyens pour modifier la température,
- des moyens pour modifier très faiblement la longueur d'onde d'émission,
- des moyens pour dissocier lesdits modes de propagation, les convertir en électrique, les retarder l'un par rapport à l'autre et les recombiner en optique.

La commande effectuée suivant la présente invention consistera dans le premier de ces exemples en une commande de ladite contrainte mécanique, dans le deuxième de ces exemples en une commande de la température, dans le troisième de ces exemples en une commande de la longueur d'onde d'émission, et dans le quatrième de ces exemples en une commande dudit retard.

## Revendications

1. Système de transmission d'informations numériques, sous forme optique sur une liaison optique, comportant un équipement d'extrémité-émission (1), un équipement d'extrémité-réception (2), et des moyens (9) de décodage correcteur d'erreurs localisés dans l'équipement d'extrémité-réception et coopérant avec des moyens (4) de codage correcteur d'erreurs localisés dans l'équipement d'extrémité-émission, des moyens d'évaluation de taux d'erreurs en réception avant décodage correcteur d'erreurs, et des moyens (7) de commande d'un ou de plusieurs paramètres caractéristiques de l'équipement d'extrémité-émission et/ou de l'équipement d'extrémité-réception, en fonction du taux d'erreurs évalué, et en fonction des capacités de correction du code correcteur d'erreurs considéré, de façon à optimiser en permanence ce ou ces paramètres au regard des performances réelles du système de transmission, sans que le taux d'erreurs en sortie desdits moyens de décodage ne dépasse le taux d'erreurs maximum spécifié pour ledit système de transmission ;
**caractérisé** en ce que l'équipement d'extrémité-émission et/ou de l'équipement d'extrémité-réception comporte des moyens prévus pour combattre les phénomènes dits de dispersion dus à des différences de vitesse de propagation de deux modes de propagation ;
et en ce les moyens (7) de commande d'un ou de plusieurs paramètres caractéristiques de l'équipement d'extrémité-émission et/ou de l'équipement d'extrémité-réception commandent un ou plusieurs paramètres des moyens prévus pour combattre les phénomènes dits de dispersion.

2. Système selon la revendication 1, caractérisé en ce que lesdits moyens d'évaluation de taux d'erreurs en réception avant décodage correcteur d'erreurs comportent des moyens de détection d'erreurs inclus dans lesdits moyens de décodage correcteur d'erreur.

3. Système selon la revendication 1, caractérisé en ce que lesdits moyens d'évaluation de taux d'erreurs en réception avant décodage correcteur d'erreurs comportent des moyens de décodage détecteur d'erreurs localisés dans l'équipement d'extrémité-réception et coopérant avec des moyens de codage détecteur d'erreurs localisés dans l'équipement d'extrémité-émission.

4. Système selon l'une des revendications 1 à 3, caractérisé en ce que ladite optimisation consiste, en cas de dégradation du taux d'erreurs observé à l'entrée desdits moyens de décodage, en un réajustement du ou desdits paramètres de façon à améliorer ce taux d'erreurs.

5. Système selon l'une des revendications 1 à 3, caractérisé en ce que ladite optimisation consiste, en cas de stabilité ou d'amélioration du taux d'erreurs à l'entrée desdits moyens de décodage, en un réajustement du ou desdits paramètres de façon à autoriser une dégradation des performances de l'émetteur et/ou du récepteur.

6. Système selon l'une des revendications 1 à 5, caractérisé en ce que ladite commande est destinée à permettre ladite optimisation tout en maintenant en permanence le taux d'erreurs (TE) en entrée desdits moyens de décodage inférieur ou égal à une valeur elle-même inférieure ou légèrement inférieure à celle permettant d'obtenir, en sortie desdits moyens de décodage (9), ledit taux d'erreurs maximum spécifié pour le système de transmission.

7. Système selon l'une des revendications 1 à 6, caractérisé en ce que dans le cas de commande d'un ou de plusieurs paramètres caractéristiques de l'équipement d'extrémité-émission, lesdits moyens de commande incluent un canal dit de retour (6) permettant d'acheminer de l'équipement d'extrémité-réception (2) vers l'équipement d'extrémité-émission (1), soit le taux d'erreurs détecté par lesdits moyens de décodage, soit directement la commande du ou des paramètres caractéristiques de l'équipement d'extrémité-émission, suivant que celle-ci est élaborée dans l'équipement d'extrémité-émission ou dans l'équipement d'extrémité-réception.

## Patentansprüche

1. System zur optischen Übertragung von digitalen Informationen über eine optische Leitung, das ein Sendeendgerät (1), ein Empfangsendgerät (2) und Fehler korrigierende Decodiermittel (3), die sich im Empfangsendgerät befinden und mit im Sendeendgerät befindlichen, Fehler korrigierenden Codiermitteln (4) zusammenarbeiten, Mittel zur Schätzung einer Fehlerrate beim Empfang vor der Fehler korrigierenden Decodierung und Mittel (7) zur Steuerung eines oder mehrerer charakteristischer Parameter des Sendeendgeräts und/oder des Empfangsendgeräts in Abhängigkeit von der geschätzten Fehlerrate und in Abhängigkeit von den Korrekturfähigkeiten des betrachteten Fehlerkorrekturcodes aufweist, um diesen oder diese Parameter im Hinblick auf die wirklichen Leistungen des Übertragungssystems dauernd zu optimieren, ohne daß die Fehlerrate am Ausgang der Decodiermittel die für das Übertragungssystem angegebene, maximale Fehlerrate übersteigt;
dadurch gekennzeichnet, daß das Sendeendgerät und/oder das Empfangsendgerät Mittel aufweist, die dafür vorgesehen sind, die Streuung genannten Phänomene aufgrund von Ausbreitungsgeschwindigkeitsdifferenzen der beiden Ausbreitungsmodi zu bekämpfen;
und daß die Steuermittel (7) für einen oder mehrere charakteristische Parameter des Sendeendgeräts und/oder des Empfangsendgeräts einen oder mehrere Parameter der Mittel steuern, die zur Bekämpfung der Streuung genannten Phänomene vorgesehen sind.

2. System nach Anspruch 1, dadurch gekennzeichnet, daß die Mittel zur Schätzung der Fehlerrate beim Empfang vor der Fehlerkorrekturdecodierung in die Fehler korrigierende Decodiermittel eingeschlossene Mittel zur Fehlererfassung aufweisen.

3. System nach Anspruch 1, dadurch gekennzeichnet, daß die Mittel zur Schätzung der Fehlerrate beim Empfang vor der Fehlerkorrekturdecodierung Fehler erfassende Decodiermittel aufweisen, die sich im Empfangsendgerät befinden und mit dem im Sendeendgerät befindlichen Fehler erfassenden Codiermitteln zusammenarbeiten.

4. System nach einem der Ansprüche 1 bis 3, dadurch gekennzeichnet, daß die Optimierung im Falle einer Verschlechterung der am Eingang der Decodiermittel beobachteten Fehlerrate in einer Nachregelung des oder der Parameter besteht, so daß diese Fehlerrate verbessert wird.

5. System nach einem der Ansprüche 1 bis 3, dadurch gekennzeichnet, daß die Optimierung im Falle der Stabilität oder der Verbesserung der Fehlerrate am Eingang der Decodiermittel in einer Nachregelung des oder der Parameter besteht, so daß eine Verschlechterung des Leistungen des Senders und/oder des Empfängers zugelassen wird.

6. System nach einem der Ansprüche 1 bis 5, dadurch gekennzeichnet, daß die Steuerung dazu bestimmt ist, die Optimierung zu gestatten, wobei sie die Fehlerrate (TE) am Eingang der Decodiermittel dauernd geringer oder gleich einem Wert hält, der selbst geringer oder etwas geringer als der ist, der gestattet, am Ausgang der Decodiermittel (9) die für das Übertragungssystem angegebene maximale Fehlerrate zu erhalten.

7. System nach einem der Ansprüche 1 bis 6, dadurch gekennzeichnet, daß im Falle der Steuerung eines oder mehrerer charakteristischer Parameter des Sendeendgeräts die Steuerungsmittel einen Rückführkanal (6) genannten Kanal umfassen, der gestattet, entweder die von den Decodiermitteln erfaßte Fehlerrate oder direkt die Steuerung des oder der charakteristischen Parameter des Sendeendgeräts, je nachdem, ob sie im Sendeendgerät oder im Empfangsendgerät verarbeitet wird, vom Empfangsendgerät (2) zum Sendeendgerät (1) zu leiten.

## Claims

1. System for transmitting digital data, in optical form on an optical link, comprising a send end unit (1), a receive end unit (2), an error correcting decoder (9) located in said receive end unit and cooperating with an error correcting coder (4) located in said send end unit, means for evaluating the bit error rate at the receiving end before error correcting decoding and means (7) for controlling one or more characteristic parameters of the send end unit and/or the receive end unit according to the evaluated bit error rate and according to the correction capabilities of the error correcting code employed so as continuously to optimize said parameter(s) in the light of the actual performance of the transmission system without the bit error rate at the output of said decoder exceeding the maximum bit error rate specified for said transmission system;
characterised in that the send end unit or the receive end unit includes means for combatting so-called dispersion phenomena due to propagation speed differences of the two propagation modes;
and in that the control unit (7) controlling one or more characteristic parameters of the send end unit and/or the receive end unit control one or more parameters of the means for combatting so-called dispersion phenomena.

2. System according to claim 1 wherein said means for evaluating the bit error rate at the receiving end before error correcting decoding comprise an error detection unit in said error correcting decoder.

3. System according to claim 1 wherein said means for evaluating the bit error rate at the receiving end before error correcting decoding comprise an error detecting decoder located in said receive end unit and cooperating with an error detecting coder located in said send end unit.

4. System according to any one of claims 1 to 3 wherein said optimization consists in adjusting said parameter(s) to improve said bit error rate in the event of deterioration of the bit error rate observed at the input of said decoder.

5. System according to any one of claims 1 to 3 wherein said optimization consists in adjusting said parameter(s) to authorize degradation of the performance of the transmitter and/or the receiver in the event of the bit error rate at the input of said decoder stabilizing or improving.

6. System according to any one of claims 1 to 5 wherein said control is adapted to enable said optimization in combination with maintaining the bit error rate (BER) at the input of said decoder at all times less than or equal to a value less than or slightly less than that at which said maximum bit error rate specified for the transmission system is obtained at the output of said decoder (9).

7. System according to any one of claims 1 to 6 wherein said means for controlling one or more characteristic parameters of said send end unit include a return channel (6) for conveying from said receive end unit (2) to said send end unit (1) either the bit error rate detected by said decoder or control signals for said characteristic parameter(s) of said send end unit, depending on whether said control signals are produced in said send end unit or in said receive end unit.
